# EUROPEAN PATENT SPECIFICATION

(11) **EP 0 905 809 B1**
(45) Date of publication and mention of the grant of the patent: **13.11.2002**
(21) Application number: 98118295.9
(22) Date of filing: 28.09.1998
(51) Int. Cl.: H01M 10/40, H01M 4/58

(54) **Gel electrolyte secondary cell**
Sekundärzelle mit Gelelektrolyt
Pile secondaire à électrolyte gélifié

(30) Priority: 30.09.1997 JP 26747897
(43) Date of publication of application: 31.03.1999
(73) Proprietor: SONY CORPORATION, Tokyo (JP)
(72) Inventor: Senoo, Tadashi, Shinagawa-ku, Tokyo (JP); Akashi, Hiroyuki, Shinagawa-ku, Tokyo (JP); Azuma, Hideto, Shinagawa-ku, Tokyo (JP); Shibuya, Mashio, Shinagawa-ku, Tokyo (JP); Noda, Kazuhiro, Shinagawa-ku, Tokyo (JP); Yamada, Shinichiro, Shinagawa-ku, Tokyo (JP); Yasuda, Toshikazu, Shinagawa-ku, Tokyo (JP); Sekai, Koji, Shinagawa-ku, Tokyo (JP)
(74) Representative: Müller - Hoffmann & Partner

(56) References cited:
- EP-A- 0 474 183
- EP-A- 0 724 305
- EP-A- 0 845 824
- WO-A-97/28570
- US-A- 5 219 679
- US-A- 5 240 790
- US-A- 5 522 127
- YAZAMI R ET AL: "HIGH REVERSIBLE CAPACITY CARBON-LITHIUM NEGATIVE ELECTRODE IN POLYMER ELECTROLYTE" JOURNAL OF POWER SOURCES, vol. 54, no. 2, 1 April 1995, pages 411-415, XP000542254

## Description

### BACKGROUND OF THE INVENTION

### Field of the invention

This invention relates to a cell employing a gel electrolyte in place of a non-aqueous electrolyte. More particularly, it relates to improvement in the negative electrode material.

### Description of the Related Art

In keeping up with recent progress in the micro-electronics industry, portable electronic equipments are being progressively reduced in size and weight and improved in performance. It is therefore required to develop a secondary cell having a high energy density and a high output.

Up to now, aqueous solution type cells, such as lead storage cells or nickelcadmium secondary cells, are predominantly used as secondary cells. These aqueous solution type secondary cells, however, cannot be said to be optimum in the weight or energy density.

On the other hand, investigations into a non-aqueous liquid electrolyte secondary cell, employing metal lithium or lithium alloys as a negative electrode material and a non-aqueous liquid electrolyte obtained on dissolving an electrolyte salt in a non-aqueous solvent as an liquid electrolyte, are proceeding briskly. The non-aqueous liquid electrolyte secondary cell is more lightweight and can develop a higher energy density than is possible with the above-mentioned aqueous solution type secondary cell.

However, if, in the non-aqueous liquid electrolyte secondary cell, employing metal lithium or lithium alloys as a negative electrode material, charging/discharging cycles are carried out repeatedly, lithium from the negative electrode undergoes dendritic crystal growth during charging. The dendritic crystals, thus formed, ultimately reach the positive electrode to produce internal shorting. This has obstructed practical utilization of the non-aqueous liquid electrolyte secondary cell.

For overcoming this drawback, there has been developed a non-aqueous liquid electrolyte secondary cell in which a carbonaceous material capable of doping/undoping lithium ions is used as a negative electrode in place of metal lithium or lithium alloys.

In this non-aqueous liquid electrolyte secondary cell, no dendritic precipitation of lithium is noticed on repetition of the charging/discharging cycles, such that optimum charging/discharging cycles are displayed. For this reason, this type of the non-aqueous liquid electrolyte secondary cell is considered to be promising as a secondary cell for load levelling by storage of superfluous power or as a large-sized secondary cell for use in automotive vehicles, and expectations are made for achieving a higher energy density and a higher cycle life.

Meanwhile, a wide variety of materials have been proposed as a carbonaceous material for a negative electrode or a positive electrode material for use in the non-aqueous liquid electrolyte secondary cell. First, as a carbonaceous material of a negative electrode, a graphitized carbon material, obtained on firing a specified starting material at an elevated temperature not lower than 2800°C, is considered to be promising since it can develop a large discharging capacity. As a positive electrode material, a lithium-containing compound is used. In particular, a complex oxide of lithium and a transition metal is thought to be optimum.

Also, in the non-aqueous liquid electrolyte secondary cell, a non-aqueous liquid electrolyte, obtained on dissolving an electrolyte salt in a non-aqueous solvent, is used as liquid electrolyte. This non-aqueous liquid electrolyte is required to be high in ion conductivity and stability. In order to meet this demand, a wide variety of combinations of the non-aqueous solvents and electrolyte salts have been proposed.

The non-aqueous solvents are enumerated by, for example, γ-butyrolactone, 1,2-dimethoxy ethane, methyl propionate and butyl propionate, in addition to carbonate-based solvents, such as propylene carbonate, ethylene carbonate, ethyl methyl carbonate or dimethyl carbonate.

The electrolyte salts may be enumerated by LiPF₆, LiClO₄, LiBF₄, LiCF₃SO₃, LiAsF, LiN(CF₃SO₂)₂ and LiC(CF₂SO₂)₃.

However, these non-aqueous liquid electrolytes, composed of the non-aqueous solvent and the electrolyte salt, are of lower thermal capacity, so that, if the cell is exposed to elevated temperatures, such as fire, the solvent is vaporized with increase in ambient temperature, thus tending to produce the risk of inflammation.

In order to combat this risk, attempts have been made to add an organic ester compound as a combustion-retarding agent to the non-aqueous liquid electrolyte or to use a gel electrolyte comprised of a non-aqueous liquid electrolyte gelated by a gelation agent to accord combustion-retarding properties to the cell.

However, the organic ester compound is inferior in an electrolyte liquid stabilizing effect during charging/discharging of the cell, so that, if it is added in an amount sufficient to exhibit the combustion-retarding properties, the charging/discharging efficiency of the cell is impaired, thus deteriorating the discharging capacity.

With the use of the gel electrolyte, as another means for combatting the combustibility, the electrolytic liquid is not affected significantly in stability, thus hardly deteriorating the discharging capacity. Moreover, if the gel electrolyte is used, the two electrodes are fixed in the relative position by having the gel electrolyte sandwiched between the electrodes, so that there is no necessity of providing means for fixing the relative position between the electrodes to contribute to realization of a thin type cell.

As a gelation agent used in such gel electrolyte, there is proposed in, for example, the Japanese Laying-Open Publication H-8-264205, a high-molecular material having a nitrile group in its side chain. The gel electrolyte, gelated by the high-molecular material having a nitrile group in its side chain, exhibits combustion-retarding properties and, if propylene carbonate as a high dielectric solvent is used as a main solvent, it also exhibits ion conductivity as high as 1 mS/cm at a temperature of 25°C.

However, if propylene carbonate is used as a non-aqueous solvent of the gel electrolyte, the following inconvenience is encountered, even if the high ion conductivity is thereby achieved.

First, if, in the non-aqueous liquid electrolyte secondary cell, employing propylene carbonate as a main solvent, a graphite type carbonaceous material is used as a negative electrode, propylene carbonate is decomposed in a known manner on the negative electrode with gas evolution (see, for example, Z.X. Mcmillan, J.J. Murray, J. Electrochem. Soc., 140,922 to 927 (1993)). The reason is that propylene carbonate is unstable against the graphite type carbonaceous material. If such decomposition occurs, the electrical power to be used for charging is wasted by this decomposition to produce discharge capacity loss to lower the charging/discharging efficiency. Such discharge capacity loss, ascribable to decomposition of propylene carbonate, similarly occurs in a cell employing a gel electrolyte.

The degree of decomposition of propylene carbonate differs with different physical properties of the graphite type carbonaceous material. In particular, the artificial graphite exhibits widely different physical properties depending on the starting material and the production process, and hence exhibits different degrees of decomposition against propylene carbonate. For example, as to the powder shape, the graphite type carbonaceous material having a larger particle size has a contact area with the liquid electrolyte smaller than with the graphite type carbonaceous material having a smaller particle size, and hence is less susceptible to decomposition of propylene carbonate to render it possible to suppress the discharge capacity loss. In this consideration, it is more meritorious to use a graphite type carbonaceous material having a larger particle size.

However, if, in a cell employing the gel electrolyte, the graphite type carbonaceous material having a larger particle size is used as a negative electrode, there is produced a defect in cell performance by the following reason:

That is, for constructing the negative electrode from the graphite type carbonaceous material, the particulate graphite type carbonaceous material is bonded as a mixture with a binder on a current-collector material. If the gel electrolyte is used, the gel electrolyte and a separator are sandwiched between the negative electrode and a positive electrode, and the resulting assembly is housed in an outer cell package to constitute a cell. With this gel electrolyte secondary cell, it is necessary for the electron conductivity and ion conductivity to be maintained between the particles of the carbonaceous material in the negative electrode, while it is also necessary for the ion conductivity to be maintained on the interface between the particles of the carbonaceous material and the gel electrolyte.

However, if the particle size of the carbonaceous material is too large, there is only poor contact between the particles of the carbonaceous material and the gel electrolyte, while the ion conduction path between the particles of the carbonaceous material is also increased. This increases impedance to lower the cell voltage to deteriorate the cell performance, such as cell capacity or load characteristics. It is noted that, if the non-aqueous liquid electrolyte is used, the non-aqueous liquid electrolyte can be easily penetrated to a space between the particles of the carbonaceous material of the negative electrode, thus scarcely producing an increased impedance despite increased size of the particles of the carbonaceous material.

If, in a cell employing the gel electrolyte as described above, the graphite type carbonaceous material is of a small particle size, decomposition of propylene carbonate occurs outstandingly, whereas, if the graphite type carbonaceous material is of a large particle size, there results increased impedance to render it difficult to improve the cell characteristics comprehensively.

The use of mesocarbon microbeads in a secondary electrochemical lithium cell is also known from WO-A-9728570. In this document also the use of propylene carbonate/ethylene carbonate mixtures is mentioned, but the use of a gel electrolyte is not disclosed.

### SUMMARY OF THE INVENTION

It is therefore an object of the present invention to provide a gel electrolyte secondary cell which achieves not only a large discharge capacity and a high charging/discharging efficiency.

For accomplishing the above object, the present invention provides a gel electrolyte secondary cell as defined in claim 1.

In a gel electrolyte secondary cell, employing the graphite type carbonaceous material, obtained on firing meso carbon micro-beads, propylene carbonate is contained in the gel electrolyte. Also, even if powders of the graphite type carbonaceous material used are of a particle size small enough to suppress the impedance sufficiently, the discharge capacity loss can be decreased to a lower value. The result is a high discharging capacity and a high charging/discharging efficiency.

### BRIEF DESCRIPTION OF THE DRAWINGS

Fig.1 is a cross-sectional view showing a cell for evaluation for evaluating characteristics of a graphite type carbonaceous material obtained on firing meso-carbon micro-beads.

Fig.2 is a cross-sectional view showing a thin-type gel electrolyte secondary cell employing the graphite type carbonaceous material obtained on firing meso-carbon micro-beads as a negative electrode material.

### DESCRIPTION OF THE PREFERRED EMBODIMENTS

Referring to the drawings, preferred embodiments of the present invention will be explained in detail.

A gel electrolyte secondary cell according to the present invention is defined by the features contained in claim 1.

The meso-carbon micro-beads, as a starting material for the graphite type carbonaceous material, belong to the so-called graphitizable carbon. Specifically, the meso-carbon micro-beads are micro-globules of liquid crystal yielded as an intermediate on transition of a phase participating in a reaction from a liquid phase to a solid phase on heat-treating an organic compound.

For producing the meso-carbon micro-beads, coal or petroleum pitch, such as coal tar pitch, is heat-treated in an inactive atmosphere at a temperature from 400° to 500°C, to produce globules of liquid crystal, which are separated from the pitch matrix as quinoline-insoluble components. The separated globules may be pulverized or classified by way of particle size adjustment, if so desired.

The graphite type carbonaceous material is obtained on firing the meso-carbon micro-beads at an elevated temperature. Forproducing the graphite type carbonaceous material with large doping/dedoping quantities of lithium ions, the firing temperature is 2800° to 3000°C.

For forming the negative electrode by this graphite type carbonaceous material, obtained in this manner, the graphite type carbonaceous material is adjusted to a suitable particle size, such as by classification, and is mixed with a binder to prepare a negative electrode material. This negative electrode material is coated on one or both surfaces of the current collector to form a layer of a negative electrode material.

The powder of the graphite type carbonaceous material has a specific surface area as measured by the BET method of 0.1 to 5 m²/g. And a mean particle size of the powder of the graphite type carbonaceous material is 5 to 100 µm. If the specific surface area exceeds 10 cm²/g or the mean particle size is less than 5 µm, the powders of the graphite type carbonaceous material is excessively comminuted in particle size thus leading to discharge capacity loss to deteriorate the cell performance. Also, if the specific surface area is less than 0.1 m²/g or the mean particle size is more than 100 µm, there is only insufficient contact between the particles of the carbon material and the gel electrolyte or an enlarged ion conduction path between particles of the carbonaceous material to increase the impedance.

The binder used preferably exhibits chemical stability and electro-chemical stability and preferably may be enumerated by vinylidene polyfluoride and polytetrafluoroethylene. The binder is used preferably in an amount of 1 to 20 wt% based on the total weight of the negative electrode material.

The current collector may, for example, be a circular or rectangular metal plate of copper.

The mixture of powders of the graphite type carbonaceous material and the binder is preferably coated to a thickness of 10 to 200 µm.

The layer of the negative electrode material may be produced by further injecting and dispersing the negative electrode material in a solvent to a paste which may then be coated and dried in situ on the current collector. This affixes the negative electrode material uniformly and strongly to the current collector. If, after formation of the negative electrode layer, press working or the like pressure affixing process is carried out, the affixing strength of the negative electrode layer to the current collector can be improved further.

The gel electrolyte secondary cell of the present invention is constituted by layering the negative electrode containing the graphite type carbonaceous material, positive electrode and the gel electrolyte, in the order of the negative electrode, gel electrolyte and the positive electrode, and accommodating the layered assembly in the outer packaging of the cell. There may additionally be provided gel electrolytes on the outer sides of the negative electrode and the positive electrode.

In the gel electrolyte secondary cell, employing the graphite type carbonaceous material as the negative electrode, discharge capacity losses may be suppressed to a lower value even if propylene carbonate is contained in the gel electrolyte and the powders of the graphite type carbonaceous material are used which are small enough in particle size to lower the impedance sufficiently. The result is a high discharging capacity and a high charging/discharging efficiency.

With the gel electrolyte secondary cell, the negative electrode material plays an important role, as explained previously. It is noted that the following materials are preferably used for the positive electrode and the gel electrolyte used in combination with the negative electrode.

First, as the positive electrode material, a lithium-containing material is used. Such a lithium-containing material is preferred which can dope/undope a sufficient amount of lithium. As this type of the lithium-containing material, there is a complex oxide of lithium and a transition metal. A complex oxide, which is a solid solution of lithium and two or more transition metals, may also be used. These compounds may be used alone or in combination.

For preparing the positive electrode from this positive electrode material, a mixed positive electrode material, composed of a positive electrode material, a binder and an agent capable of affording electrical conductivity to the electrode is coated on both sides of the current collector to form a mixed positive electrode layer.

The binders exemplified in connection with the negative electrode may be unexceptionally used as the binder for the positive electrode material. The agent capable of affording electrical conductivity may be exemplified by a carbonaceous material. The current collector may, for example, be a circular or rectangular metal plate of aluminum.

The layer of the mixed positive electrode material may be produced by further injecting and dispersing the mixed positive electrode material in a solvent to a paste which is then coated and dried in situ on the current collector. This affixes the mixed positive electrode material uniformly and strongly to the current collector. If, after formation of the mixed positive electrode layer, press working or the like pressure affixing process is carried out, the affixing strength of the mixed negative electrode layer to the current collector can be improved further.

The gel electrolyte material is composed of a electrolyte salt, a non-aqueous solvent and a high-molecular material.

Of these, the electrolyte salt and the non-aqueous solvent routinely used in the non-aqueous liquid electrolyte secondary cell employing doping/undoping of lithium to or from the electrode may be used. In particular, the following needs to be taken into account in selecting the electrolyte salt and the non-aqueous solvent.

First, lithium salts are used as the electrolyte salt. LiPF₆ is preferred since it is superior in ion conductivity and has the effect of according combustion-retarding properties to the gel. Although LiPF6 may be used in a mixture with other lithium salt(s), it is preferred to use LiPF6 alone in view of ion conductivity and combustion-retarding properties. If LiPF6 is used alone, it is preferably set to a concentration of 0.4 to 2 mol/cm³ of the non-aqueous solvent. If the concentration of the electrolyte salt is outside this range, sufficient ion conductivity cannot be achieved.

The non-aqueous solvent is preferably selected so that its potential window is in a range from -0.3V to 4.9V with respect to the lithium potential, a sufficiently high ion conductivity can be afforded to the gel electrolyte and so that a gel with good film forming properties can be prepared. To this mixture system can also be added other non-aqueous solvent(s), such as γ-butyrolactone. In the propylene carbonate-ethylene carbonate mixture system, the content of propylene carbonate is 10 mol% to 75 mol% and more preferably 10 mol% to 35 mol% based on the non-aqueous solvent.

As the high-molecular material, polyacrylonitrile is preferred since it has a good gelated state and superior combustion-retarding properties. Copolymers of polyacrylonitrile with other monomers may also be employed. Examples of monomer species for copolymerisation include acrylates, methacrylates, acrylic acid, methacrylic acid, vinyl acetate, itaconic acid, hydrogenated methyl acrylate, hydrogenated ethyl acrylate, acrylic amides, vinyl chloride, vinylidene chloride, acrylonitrile butadiene rubber, acrylonitrile butadiene, acrylonitrile polyethylene chloride propylene diene styrene resin, acrylonitrile vinyl methacrylate resin, acrylonitrile methacrylate resin and acrylonitrile acrylate resin. These may be used alone or in combination for copolymerisation.

The gelation degree of the gel electrolyte is closely related with the molecular weight of the high-molecular material. For realizing a state of gelation suited as the electrode material, the number average molecular weight of the high-molecular material is 5000 to 500000. The optimum amount of addition of the high-molecular material is preferably such that the molar ratio of monomeric repetitive units of polyacrylonitrile to the non-aqueous solvent will be 5:95 to 30:70, depending on the types of the non-aqueous solvent or the electrolyte salt, if polyacrylonitrile is used as a high-molecular material.

For preparing the gel electrolyte from these materials, a defined amount of the electrolyte salts is dissolved in the non-aqueous solvent to prepare a non-aqueous liquid electrolyte. To this non-aqueous liquid electrolyte is added a high-molecular material having a nitrile group in its side chain and the resulting mixture is stirred. If the high-molecular material is added to the non-aqueous solvent, the solution is raised in viscosity. The gel solution obtained on complete dissolution of the high-molecular material is promptly developed on a substrate and allowed to cool to form a semi-solid gel electrolyte.

The above-described gel electrolyte is itself not susceptible to combustion. Moreover, since the liquid electrolyte is gelated, it is possible to inhibit liquid leakage. Thus, if the cell employing this gel electrolyte is loaded on an electronic equipment, there is no risk of contaminating surrounding devices by liquid leakage.

Also, if the gel electrolyte is obtained by combining a mixed solvent of propylene carbonate and ethylene carbonate with LiPF₆, it is possible to achieve ion conductivity not less than 1 mS/cm at a temperature of 25°C or lower to impart high capacity to the cell.

Meanwhile, the gel electrolyte is interposed between the negative electrode and the positive electrode and has, in this case, the function as a separator. However, it is also possible to use an independent separator such that the cell may be constituted by layering the negative electrode, gel electrolyte, separator, gel electrolyte and the positive electrode in this order. The separator may be a porous film formed of polypropylene or polyethylene. In this case, gel electrolytes may be further layered on the outer sides of the negative and positive electrodes.

### EXAMPLES

The present invention is hereinafter explained on the basis of experimental results of illustrative examples of the present invention. The following Examples 1 and 2 and the Comparative Example are experiments on an evaluation cell for sole electrode evaluation in which the cell system is made up of an operating electrode containing a carbonaceous material and a positive electrode containing a lithium transition metal complex oxide.

### Example 1

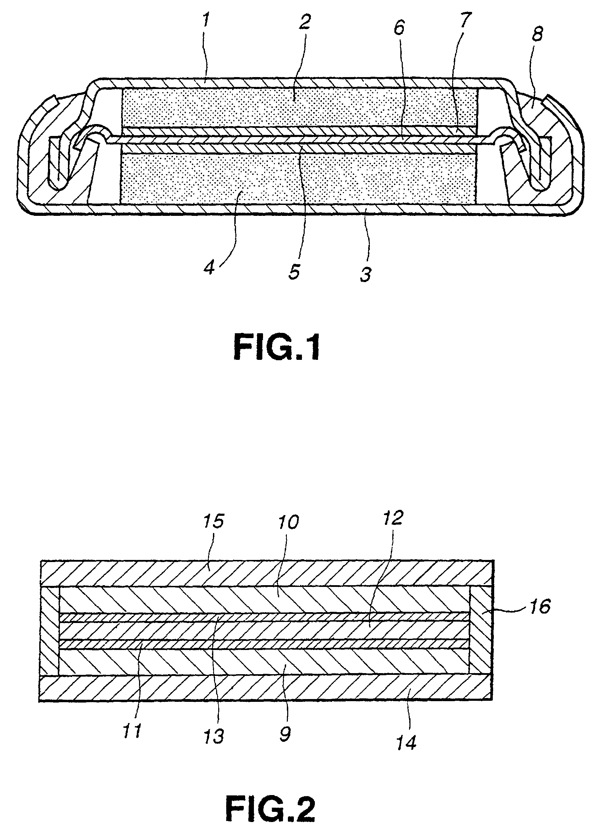

Fig.1 shows a coin-shaped evaluation cell prepared in the present Example. This evaluation cell is prepared by layering a disc-shaped operating electrode 2 accommodated in an external cup 1 and a disc-shaped counterelectrode 4 accommodated in an outer packaging can 3 with the interposition of a layered structure of a gel electrolyte 5/separator 6/gel electrolyte 7. The external cup 1 and the outer packaging can 3 are caulked at rim portions thereof by an insulating gasket 8 for hermetically sealing the cell.

The above-described evaluation cell was prepared as follows:

First, powders of a carbonaceous material, which is a fired material of meso-carbon micro-beads (manufactured by OSAKA GAS KK under the trade name of MCMB6-28), was readied, and were kept for one hour in an argon atmosphere at a temperature of 600°C. The specific surface area of powders of the as-dried carbonaceous material was measured by the BET adsorption method, and found to be 3.6 m²/g.

Using this carbonaceous material, the operating electrode was prepared as follows:

90 wt% of powders of the carbonaceous material and 10 wt% of polyvinylidene fluoride were mixed together and added to with N-methyl pyrrolidone as a solvent. The resulting mixture was kneaded together to form a paste of a mixed negative electrode material. This paste was coated to a uniform thickness on a copper foil as a current collector and dried at a temperature of 90°C to vaporize off the solvent. The mixed negative electrode material, coated on the copper foil, was pressed by a roll press and punched to a circular piece 15.5 mm in diameter to produce an operating electrode 2.

On the other hand, the counterelectrode 4 was prepared by punching a lithium metal foil to a circular piece 15.5 mm in diameter.

The gel electrolytes 5, 7 were prepared as follows:

First, 35 mol% of propylene carbonate and 65 mol% of ethylene carbonate were mixed together and LiPF₆ was dissolved to a concentration of 1 mol/cm³ to prepare a non-aqueous liquid electrolyte. This non-aqueous liquid electrolyte was heated to 120°C and added to gradually with polyacrylonitrile having a number-average molecular weight of 150000 to prepare a gel electrolyte. It is noted that the amount of addition of polyacrylonitrile is 10 mol% in terms of the ratio of recurrent units to the non-aqueous solvent.

The gel electrolyte, thus prepared, was coated in a suitable amount on the reactive electrode surfaces of the operating electrode 2 and the counterelectrode 4. The electrodes 2, 4, thus coated, were charged in the external cup 1 and in the outer packaging can 3, respectively. The operating electrode 2 and the counterelectrode 4 were stacked together, with the sides thereof coated with the gel electrolytes facing each other and with aseparator 6 of a polypropylene film in-between. The rim portions of the external cup 1 and the outer packaging can 3 were hermetically sealed together by caulking with an insulating gasket 8 in-between to produce the evaluation cell.

### Example 2

Another evaluation cell was prepared in the same way as in Example 1 except using powders of the carbonaceous material of the operating electrode manufactured by OSAKA GAS KK under the trade name of MCMB25-28.

The specific surface area of the as-dried powders of the carbonaceous material, as measured by the BET adsorption method, was found to be 1.2 m²/g.

### Comparative Example 1

Another evaluation cell was prepared in the same way as in Example I except using powders of the carbonaceous material of the operating electrode which were prepared as follows:

First, to 100 parts by weight of the filler-like petroleum based coke were added 30 parts by weight of the coal tar pitch as a binder. The resulting mass was heated to approximately 100°C and pressed to form a precursor of a molded product of a carbonaceous material. This molded product was heat-treated at 100°C or higher to produce a molded article.

This molded article of the carbonaceous material was impregnated with a binder pitch fused at a temperature not higher than 200°C and was then heat-treated at a temperature not higher than 1000°C. This sequence of operations of the pitch impregnation/firing was repeated several times. The resulting mass was then heat-treated at 2600°C under an inactivated atmosphere to produce a graphitized molded article which was then pulverized and classified to produce powders of the graphitized carbonaceous material .

The specific surface area of the as-dried powders of the graphitized carbonaceous material, thus produced, was measured by the BET adsorption method, was found to be 4.5 m²/g.

The evaluation cells, prepared as described above were subjected to a charging/discharging test at a temperature of 25°C in order to find the discharging capacity per 1 g of the graphitized carbonaceous material and the initial charging/discharging efficiency (discharging capacity/charging capacity)X100%. The charging/discharging test was carried out as follows:

Charging Test: A constant-current charging was carried out at a current value of 0.5 mA until the circuit voltage reached 0 mV. At a time point the circuit voltage reached 0 mV, the constant current charging was switched to the constant voltage charging. The charging was continued until the current value reached 3 µA, at which time point the charging was discontinued for 120 minutes. Then, constant current discharging was carried out at a current value of 0.5 mA until the circuit voltage reached 1.5V. The charging capacity and the discharging capacity were found from the amount of current flowing at this time. For this test, the process of doping lithium into the carbonaceous material was termed charging, while the process of undoping lithium from the carbonaceous material was termed discharging.

The measured values of the discharging capacity and the initial discharging capacity per g of the graphitized carbonaceous material are shown in table 1.

**TABLE 1**

| | charging capacity (mAh/g) | initial charging/discharging efficiency (%) |
|---|---|---|
| Ex.1 | 290 | 82.8 |
| Ex.2 | 327 | 82.6 |
| Comp. Ex.1 | 321 | 61 |

In the evaluation cells of Examples I and 2, employing the powders of the graphitized carbonaceous material, obtained on firing the meso-carbon micro-beads as shown in Table 1, as the negative electrode material, it is possible to obtain a charging/discharging efficiency higher than that in the evaluation cell of the Comparative Example 1 obtained using the powders of the graphitized carbonaceous material, obtained in turn by firing petroleum coke, as the negative electrode material.

From this, it could be seen that the negative electrode material, formed of a graphitized carbonaceous material obtained on firing the meso-carbon micro-beads, is superior in charging/discharging efficiency.

### Example 3

Fig.2 shows a thin type cell prepared by the present Example. With the present cell, a negative electrode 9 and a positive electrode 10, both in the form of flat plates, are layered together via a layered structure of the gel electrolyte 11/separator 12/gel electrolyte 13. On the negative electrode 9 and the positive electrode 10 of this layered structure are arranged outer cell packages 14, 15 in the form of flat plates, while an insulating packing 16 is arranged on the end faces of the layers structure. The rim portions of the outer cell packages 14, 15 are bonded to the insulating packing 16 to hermetically seal the cell.

This thin type cell was prepared as follows"

First, in producing the negative electrode 9, a paste-like mixed negative electrode material, containing powders of the graphitized carbonaceous material, comprised of a sintered meso-carbon micro-beads (manufactured by OSAKA GAS KK under the trade name of MCMB6-28), was prepared in the same way as in Example 1.

This paste of the mixed negative electrode material was coated to a uniform thickness on a copper foil as a current collector and dried at a temperature of 90°C to volatilize off the solvent. The mixed negative electrode material coated on the copper foil was pressed by a roll press and sliced to a square of 8 cm² to prepare the negative electrode 9.

Then, for producing the positive electrode 10, 90 wt% of lithium cobaltate, 5 wt% of graphite, as an agent for affording electrical conductivity, and 5 wt% of polyvinylidene polyfluoride, were mixed together and kneaded with N-methyl pyrrolidone as a solvent to prepare a paste-like mixed positive electrode material.

The paste-like mixed positive electrode material was coated to a uniform thickness on an aluminum foil, operating as a current collector, and was dried at a temperature of 90°C to volatilize off the solvent. The mixed positive electrode material coated on the copper foil was pressed by a roll press and sliced to a square of 8 cm² to prepare the positive electrode 10.

The gel electrolyte was then prepared in the same way as in Example 1 and coated in a suitable amount on the reactive electrode surfaces of the negative electrode 9 and the positive electrode 10. The negative electrode 9 was fitted in the insulating packing 16 and the positive electrode 10 was layered on the negative electrode 9, with the interposition of a separator 12 of a polypropylene film, so that the sides of the negative electrode 9 and the positive electrode 10 coated with the gel electrolytes 11, 13 will face each other. The negative electrode 9 and the positive electrode 10, thus layered together, were sandwiched between the outer cell packages 14, 15. The rim portions of the negative electrode 9 and the positive electrode 10 were bonded to the insulating packing 16 to produce the thin-type cell.

### Example 4

A thin-type cell was produced in the same way as in Example 3 except using powders of the graphitized carbonaceous material of the negative electrode manufactured by OSAKA GAS KK

### Comparative Example 2

A thin-type cell was produced in the same way as in Example 3 except using those prepared from petroleum coke in the same way as in Comparative Example 1.

The thin type cell, prepared as described above, was put to a charging/discharging test at a temperature of 25°C in order to find the discharging capacity and the initial charging/discharging efficiency [(discharging capacity/charging capacity) X 100(%)]. The charging/discharging test was carried out as follows:

Charging/discharging test: At a current density of 200µA/cm2, constant current charging was carried out until the current density reached 4.2V. At a time point when the circuit voltage reached 4.2 V, the constant current charging was switched to constant voltage charging. After continuing charging until the total charging time reached 20 hours, charging was discontinued for 120 minutes. Then, at a current density of 200 µA/cm2, constant current charging was carried out until the current density reached 2.5V. From the magnitude of the current flowing at this time; the charging capacity and the discharging capacity were found.

Table 2 shows the values of the discharging capacity of the measured cell and the initial charging/discharging efficiency.

**TABLE 2**

| | discharging capacity (mAh/g) | initial charging/discharging efficiency (%) |
|---|---|---|
| Ex.3 | 20 | 74.5 |
| Ex.4 | 20 | 74.1 |
| Comp. Ex. 2 | 20 | 56 |

If the cells of the Examples 3 and 4 employing powders of the graphitized carbonaceous material, obtained on firing meso-carbon micro-beads, as shown in Table 2, as the negative electrode material, are compared to the cell of the Comparative Example 2 employing powders of the graphitized carbonaceous material as the negative electrode material, obtained on firing petroleum coke, it is seen that the cells of the Examples 3 and 4 give a charging/discharging efficiency higher than that of the cell of the Comparative Example 2 for the same discharging capacity.

From this is seen that, if the powders of the graphitized carbonaceous material obtained on firing the meso-carbon micro-beads as the negative electrode material is highly effective in improving the charging/discharging efficiency in actual cells.

As may be seen from the foregoing, the gel electrolyte secondary cell of the present invention, employing the graphitized carbonaceous material obtained on firing the meso-carbon micro-beads as the negative electrode material, undergoes discharge capacity loss to a lesser extent to realize a large discharging capacity and a high charging/discharging efficiency, even if propylene carbonate is contained in the gel electrolyte and powders of the graphitized carbonaceous material are of reduced particle size to such an extent that the impedance can be suppressed sufficiently .

## Claims

1. A gel electrolyte secondary cell comprising:
a positive electrode comprising a lithium containing material which can dope/undope lithium;
a semi-solid gel electrolyte composed of a lithium salt as an electrolyte salt, a non-aqueous solvent containing at least propylene carbonate in a proportion of 10 mol% to 75 mol% and ethylene carbonate, and a high-molecular material having a nitrile group in its side chain and having a number average molecular weight of between 5,000 and 500,000, and
a negative electrode containing a graphitized carbonaceous material obtained by the following steps:
heat-treating a coal or petroleum pitch in an inactive atmosphere at a temperature from 400° to 500°C to produce globules of liquid crystal,
separating the globules from the pitch matrix as quinoline-insoluble components to obtain meso-carbon micro-beads;
firing the meso-carbon micro-beads at a temperature of 2800° to 3000°C thereby obtaining a graphite type carbonaceous material;
adjusting the particle size of the graphite type carbonaceous material thereby obtaining a powder of a graphite type carbonaceous material that has a specific surface area as measured by the BET method of 0,1 to 5 m²/g and a mean particle size of 5 to 100 µm

2. The gel electrolyte secondary cell according to claim 1, wherein the high-molecular material having a nitrile group in its side chain is polyacrylonitrile and wherein the molar ratio of the acrylonitrile monomer to the non-aqueous solvent is 5:95 to 30:70.

3. The gel electrolyte secondary cell according to claim 1, wherein the non-aqueous solvent of the non-aqueous liquid electrolyte contains at least one selected from the group of γ-butyrolactone, methylethylcarbonate and dimethylcarbonate in addition to propylene carbonate and ethylene carbonate.

4. The gel electrolyte secondary cell according to claim 1, wherein the electrolyte salt of the non-aqueous solvent is LiPF₆ and wherein the concentration of this LiPF₆ with respect to the non-aqueous solvent is 0.4 to 2 mol/cm³.

5. The gel electrolyte secondary cell according to claim 1, wherein the lithium containing compound is a complex compound of lithium and a transition metal.

## Patentansprüche

1. Gelelektrolytsekundärzelle umfassend:
eine ein lithiumhaltiges Material enthaltende positive Elektrode, welche Lithium abgeben/aufnehmen kann;
einen halbfesten Gelelektrolyten, der zusammengesetzt ist aus einem Lithiumsalz als Elektrolytsalz, einem nicht-wässrigen Lösungsmittel, das zumindest Propylencarbonat in einem Anteil von 10 mol-% bis 75 mol-% und Ethylencarbonat enthält, und einem hochmolekularen Material, welches in seiner Seitenkette eine Nitrilgruppe enthält und ein zahlengewichtetes mittleres Molekülgewicht zwischen 5,000 und 500,000 aufweist, und
eine negative Elektrode, die ein durch die folgenden Schritte erhaltenes graphitiertes Kohlenstoffmaterial enthält:
Erhitzen von Kohle oder Petrolpech in einer inerten Atmosphäre auf 400°C bis 500°C zur Herstellung von Flüssigkristallkügelchen,
Abtrennen der Flüssigkristallkügelchen von der Pechmatrix als in Chinolin unlösliche Bestandteile unter Erhalt von Mikrokügelchen aus meso-Kohlenstoff;
Brennen der Mikrokügelchen aus meso-Kohlenstoff bei einer Temperatur von 2800°C bis 3000°C, wodurch ein graphitartiges Kohlenstoffmaterial erhalten wird;
Anpassen der Teilchengröße des graphitartigen Kohlenstoffmaterials, wobei ein Pulver eines graphitartigen Kohlenstoffmaterials erhalten wird, welches eine durch das BET-Verfahren ermittelte spezifische Oberfläche von 0,1 bis 5 m²/g und eine mittlere Teilchengröße von 5 bis 100 µm aufweist.

2. Gelelektrolytsekundärzelle nach Anspruch 1, wobei das eine Nitrilgruppe in ihrer Seitenkette enthaltende hochmolekulare Material Polyacrylnitril ist und das Molverhältnis des Acrylnitrilmonomers zu dem nicht-wässrigen Lösungsmittel zwischen 5:95 bis 30:70 liegt.

3. Gelelektrolytsekundärzelle nach Anspruch 1, wobei das nicht-wässrige Lösungsmittel des nicht-wässrigen flüssigen Elektrolyten zusätzlich zu Propylencarbonat und Ethylencarbonat zumindest ein Carbonat enthält, das ausgewählt ist aus der Gruppe bestehend aus γ-Butyrolacton, Methlyethylcarbonat und Dimethylcarbonat.

4. Gelelektrolytsekundärzelle nach Anspruch 1, wobei das Elektrolytsalz des nicht-wässrigen Lösungsmittels LiPF₆ ist und wobei die Konzentration dieses LiPF₆ bezogen auf das nicht-wässrige Lösungsmittel zwischen 0.4 und 2 mol/cm³ beträgt.

5. Gelelektrolytsekundärzelle nach Anspruch 1, wobei die lithiumhaltige Verbindung eine Komplexverbindung aus Lithium und einem Übergangsmetall ist.

## Revendications

1. Accumulateur à électrolyte de gel comprenant :
une électrode positive comprenant un matériau contenant du lithium qui peut doper/dédoper du lithium ;
un électrolyte de gel semi-solide constitué d'un sel de lithium comme sel d'électrolyte, d'un solvant non aqueux contenant au moins du carbonate de propylène dans une proportion de 10 % en mole à 75 % en mole et du carbonate d'éthylène, et d'un matériau de poids moléculaire élevé ayant un groupe nitrile sur sa chaîne latérale et ayant un poids moléculaire moyen en nombre compris entre 5 000 et 500 000, et
une électrode négative contenant un matériau carboné graphitisé obtenu par les étapes suivantes, consistant :
à traiter thermiquement un charbon ou une poix de pétrole dans une atmosphère inerte à une température de 400° à 500°C pour produire des globules de cristal liquide,
à séparer les globules de la matrice de poix comme constituants insoluble dans de la quinoline pour obtenir des microbilles de méso-carbone ;
à cuire les microbilles de méso-carbone à une température de 2 800° à 3 000°C, obtenant par là un matériau carboné de type graphite ;
à ajuster la taille de particules du matériau carboné de type graphite, obtenant par là une poudre d'un matériau carboné de type graphite qui présente une surface spécifique mesurée par le procédé BET comprise entre 0,1 et 5 m²/g et une taille moyenne de particules comprise entre 5 et 100 µm.

2. Accumulateur à électrolyte de gel selon la revendication 1, dans lequel le matériau de poids moléculaire élevé ayant un groupe nitrile dans sa chaîne latérale est du polyacrylonitrile et dans lequel le rapport molaire du monomère acrylonitrile au solvant non aqueux est compris entre 5:95 et 30:70.

3. Accumulateur à électrolyte de gel selon la revendication 1, dans lequel le solvant non aqueux de l'électrolyte liquide non aqueux contient au moins un solvant choisi parmi la γ-butyrolactone, le carbonate de méthyléthyle et le carbonate de diméthyle en plus du carbonate de propylène et du carbonate d'éthylène.

4. Accumulateur à électrolyte de gel selon la revendication 1, dans lequel le sel d'électrolyte du solvant non aqueux est LiPF₆ et dans lequel la concentration de ce LiPF₆ par rapport au solvant non aqueux est comprise entre 0,4 et 2 mol/cm³.

5. Accumulateur à électrolyte de gel selon la revendication 1, dans lequel le composé contenant du lithium est un composé complexe de lithium et d'un métal de transition.
